(19) **Europäisches Patentamt / European Patent Office / Office européen des brevets**

(11) **EP 4 481 450 A1**

(12) **EUROPEAN PATENT APPLICATION**
published in accordance with Art. 153(4) EPC

(43) Date of publication:
**25.12.2024 Bulletin 2024/52**

(21) Application number: **23756033.9**

(22) Date of filing: **06.01.2023**

(51) International Patent Classification (IPC):
**G02B 6/02** (2006.01)    **C03C 13/04** (2006.01)

(52) Cooperative Patent Classification (CPC):
**C03C 13/04; G02B 6/02**

(86) International application number:
**PCT/JP2023/000220**

(87) International publication number:
**WO 2023/157505 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.02.2022 JP 2022021856**

(71) Applicant: **SUMITOMO ELECTRIC INDUSTRIES, LTD.**
**Osaka-shi, Osaka 541-0041 (JP)**

(72) Inventors:
- **SAKUMA, Hirotaka**
  **Osaka-shi, Osaka 541-0041 (JP)**
- **KAWAGUCHI, Yuki**
  **Osaka-shi, Osaka 541-0041 (JP)**
- **SATO, Shin**
  **Osaka-shi, Osaka 541-0041 (JP)**

(74) Representative: **TBK**
**Bavariaring 4-6**
**80336 München (DE)**

(54) **OPTICAL FIBER**

(57) This optical fiber comprises a silica-based glass. The optical fiber is equipped with: a core containing chlorine and one or more elements from among an alkali metal element group comprising alkali metal elements and alkali earth metal elements; and cladding that surrounds the core and has a lower refractive index than the refractive index of the core. The average concentration CA of the alkali metal element group throughout the core and the average concentration CC of chlorine throughout the core satisfy CC/CA > 1.0.

**FIG. 4**

EP 4 481 450 A1

**Description**

TECHNICAL FIELD

The present disclosure relates to an optical fiber. This application claims priority based on Japanese Patent Application No. 2022-021856 filed on February 16, 2022, and the entire contents of the Japanese patent application are incorporated herein by reference.

BACKGROUND ART

In general, when a core made of silica-based glass contains an alkali metal element or an alkaline-earth metal element, the viscosity of the core is reduced and the rearrangement of glass is promoted when an optical fiber is manufactured by drawing an optical fiber preform, so that transmission loss of the optical fiber due to Rayleigh scattering is reduced. Hereinafter, both the alkali metal element and the alkaline-earth metal element are referred to as an "alkali metal element group".

Patent literature 1 and Patent literature 2 describe optical fibers in which a core made of silica-based glass includes an alkali metal element group.

CITATION LIST

PATENT LITERATURE

Patent literature 1: Japanese Unexamined Patent Application Publication (Translation of PCT Application) No. JP 2009-541796
Patent literature 2: Japanese Unexamined Patent Application Publication No. 2017-76053

SUMMARY OF INVENTION

An optical fiber according to an aspect of the present disclosure is an optical fiber made of silica-based glass, the optical fiber includes a core containing chlorine and one or more elements among an alkali metal element group consisting of alkali metal elements and alkaline-earth metal elements, and a cladding surrounding the core and having a refractive index lower than a refractive index of the core. An average concentration CA of the alkali metal element group in the entire core and an average concentration CC of chlorine in the entire core satisfy $CC/CA > 1.0$.

BRIEF DESCRIPTION OF THE DRAWINGS

FIG. 1 is a cross-sectional view of an optical fiber according to an embodiment.
FIG. 2 is a flowchart showing a method for manufacturing an optical fiber.
FIG. 3 is a graph showing a relationship between a core average Cl concentration/a core average K concentration and transmission loss.
FIG. 4 is a graph showing a relationship between a core average Cl concentration/a core average K concentration and transmission loss.
FIG. 5 is a graph showing a relationship between a core average Cl concentration/a core average K concentration and transmission loss.
FIG. 6 is a graph showing a relationship between a core average Cl concentration/a core average K concentration and transmission loss.
FIG. 7 is a graph showing a relationship between a core average F concentration/a core average K concentration and transmission loss.

DETAILED DESCRIPTION

[Problems to be Solved by Present Disclosure]

When the core containing the alkali metal element group does not contain chlorine (or when the chlorine content is low), in a state of the optical fiber preform, the bond of the glass molecular structure is broken when the alkali metal element group added to a center portion of a core region diffuses during drawing. As a result, glass defects are generated, and an increase in transmission loss due to the glass defects occurs. When the core contains a sufficient amount of chlorine, the chlorine bonds to the glass defects. This suppresses the occurrence of glass defects and reduces an increase in transmission loss due to glass defects.

The transmission loss of the optical fiber in which an alkali metal element group is added to the core includes Rayleigh scattering loss, loss due to glass defects, and loss due to concentration fluctuations of both alkali and halogen. Thus, in order to reduce the transmission loss, it is necessary to optimize these loss factors. Therefore, the transmission loss cannot be sufficiently reduced only by optimizing the concentration of a single element. For example, although it is a qualitative argument, when an amount of the alkali metal element group is small, an amount of chlorine bonded to the glass defect may be small, and when the amount of the alkali metal element group is large, the amount of chlorine bonded to the glass defect is required to be large. The optical fibers described in patent literature 1 and patent literature 2 cannot sufficiently reduce the transmission loss.

An object of the present disclosure is to provide an optical fiber capable of sufficiently reducing transmission loss.

[Advantageous Effects of Present Disclosure]

According to the present disclosure, an optical fiber capable of sufficiently reducing transmission loss can be provided.

[Description of Embodiments of Present Disclosure]

First, embodiments of the present disclosure will be listed and described. An optical fiber according to an aspect of the present disclosure is an optical fiber made of silica-based glass, the optical fiber includes a core containing chlorine and one or more elements among an alkali metal element group consisting of alkali metal elements and alkaline-earth metal elements, and a cladding surrounding the core and having a refractive index lower than a refractive index of the core. An average concentration CA of the alkali metal element group in the entire core and an average concentration CC of chlorine in the entire core satisfy CC/CA > 1.0. In the present disclosure, all "concentrations" are expressed by "mass fraction".

In the optical fiber, transmission loss can be sufficiently reduced.

CC/CA may be smaller than 500.

In an area ranging from a central axis of the optical fiber to a position at 1/2 of a radius of the core, a straight line obtained by fitting, by least squares, values of a ratio CC (r)/CA (r) of a concentration CA (r) of the alkali metal element group to a concentration CC (r) of chlorine at a position of a radius r away from the central axis of the optical fiber may have a positive slope.

CC (r)/CA (r) may be less than 1 in an area within 1 $\mu$m from the central axis of the optical fiber.

The core may further contain fluorine, and an average concentration CF of fluorine in the entire core may satisfy CF/CA $\leq$ 100.

The average concentration CA of the alkali metal element group in the entire core may be 0.2 ppm to 2000 ppm on a mass fraction basis.

The core may contain, as the alkali metal element group, one or more elements among sodium, potassium, rubidium, cesium, and calcium.

[Details of Embodiments of Present Disclosure]

Specific examples of an optical fiber of the present disclosure will be described below with reference to the drawings. The present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

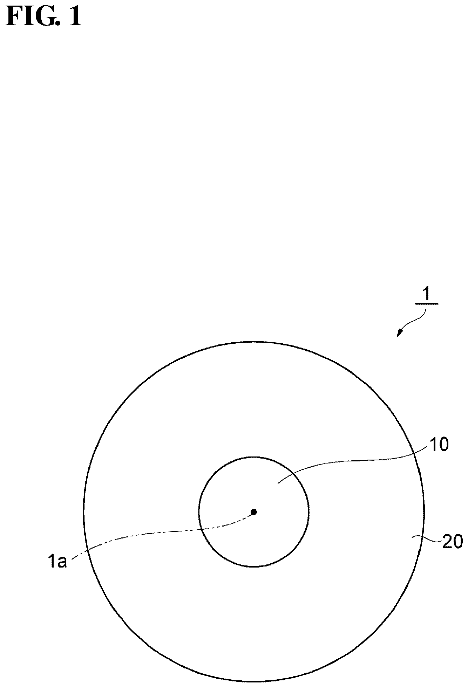

FIG. 1 is a cross-sectional view of an optical fiber according to the embodiment. As shown in FIG. 1, an optical fiber 1 according to the embodiment includes a core 10 and a cladding 20. Optical fiber 1 is made of silica-based glass.

Core 10 extends along a central axis 1a of optical fiber 1. The diameter of core 10 (core diameter) is, for example, 7 $\mu$m to 20 $\mu$m. Core 10 has a refractive index higher than a refractive index of cladding 20. Core 10 contains chlorine and one or more elements among an alkali metal element group consisting of alkali metal elements and an alkaline-earth metal elements. Core 10 contains one or more elements among sodium, potassium, rubidium, cesium, and calcium as the alkali metal element group. An average concentration of the alkali metal element group in the entire core 10 is 0.2 ppm to 2000 ppm on a mass fraction basis. An average concentration of chlorine in the entire core 10 is 10 ppm to 10000 ppm on a mass fraction basis.

When the average concentration of the alkali metal element group in the entire core 10 is CA and the average concentration of chlorine in the entire core 10 is CC, CC/CA is larger than 1.0 and smaller than 500. In an area ranging from central axis 1a of optical fiber 1 to a position at 1/2 of a radius of core 10, a straight line obtained by fitting, by least squares, values of a ratio CC (r)/CA (r) of a concentration CA (r) of the alkali metal element group to a concentration CC (r) of chlorine at a position of a radius r away from central axis 1a has a positive slope.

Core 10 further contains fluorine. The average concentration of fluorine in entire core 10 is 30 ppm to 5100 ppm on a mass fraction basis. When the average concentration of fluorine in entire core 10 is CF, CF/CA is 1000 or less. A concentration of the other dopants and impurity contained in core 10 is 10 ppm or less on a mass fraction basis.

The concentration of elements contained in optical fiber 1 is measured, for example, as follows. An end face of optical fiber 1 perpendicular to central axis 1a is polished, and a concentration C (r) at a position of radius r of an element to be measured is measured at each position along a straight line passing through the center position on the end face by an electron probe micro analyzer (EPMA). The conditions of the measurement by EPMA are, for example, an acceleration voltage of 20 kV, a probe beam size of 1 μm or less, and a measurement interval of 100 nm or less. When the radius of core 10 is a, the average concentration of the element to be measured in entire core 10 is expressed by the following Equation (1). When core 10 contains two or more elements among the alkali metal element group, the sum of the concentrations obtained by using each element as a measurement target is set as CA (r), and the sum of the average concentrations obtained by using each element as a measurement target is set as the average concentration CA.

[Formula 1]

$$\frac{2\int_0^a C(r)\cdot r\cdot dr}{a^2} \quad (1)$$

Cladding 20 surrounds core 10 and has a refractive index lower than that of core 10. Cladding 20 has a diameter of, for example, 124 μm to 126 μm. Cladding 20 includes, for example, a first cladding surrounding core 10 and a second cladding surrounding the first cladding.

The cutoff wavelength of optical fiber 1 is, for example, 1200 nm to 1600 nm. The effective area of optical fiber 1 is, for example, 70 μm$^2$ to 170 μm$^2$.

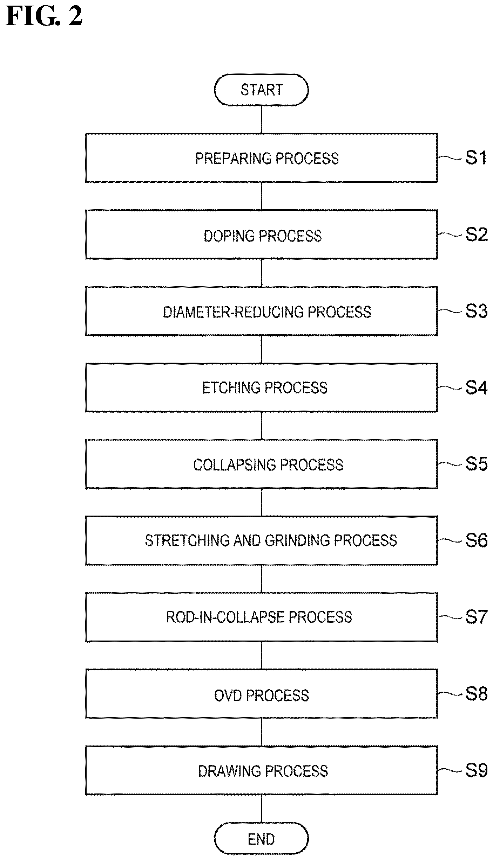

FIG. 2 is a flowchart showing a method for manufacturing an optical fiber. In the following description, an example of specific conditions is also described. As shown in FIG. 2, optical fiber 1 is manufactured through a preparing process (step S1), a doping process (step S2), a diameter-reducing process (step S3), an etching process (step S4), a collapsing process (step S5), a stretching and grinding process (step S6), a rod-in-collapse process (step S7), an OVD process (step S8), and a drawing process (step S9) in this order.

In the preparing process (step S1), a glass pipe of silica-based glass in which a dopant such as an alkali metal element group is to be diffused is prepared. The glass pipe has an outer radius of 30 mm to 40 mm and an inner radius of 15 mm to 25 mm. A silica-based glass cylindrical body which is the base of the glass pipe contains chlorine and fluorine. The concentration of fluorine contained in the cylindrical body is 30 ppm to 5100 ppm on a mass fraction basis. The concentration of other dopants and impurity contained in the columnar body is 10 ppm or less on a mass fraction basis. The concentration referred to here is the average concentration of the entire cylindrical body, and is expressed by the following formula (2), where b is the radius of the cylindrical body.

[Formula 2]

$$\frac{2\int_0^b C(r)\cdot r\cdot dr}{b^2} \quad (2)$$

The concentration C (r) at a radius r of the element in the cylindrical body is measured by EPMA as in the case of the optical fiber. The measurement conditions may be different from those for the optical fiber. There is no problem if the concentration is calculated using the calibration curve under each condition.

In the doping process (step S2), a dopant of the alkali metal element group is doped into an inner surface of the glass pipe of silica-based glass (hereinafter, referred to as a glass pipe). Here, a case of adding a potassium element will be described. Potassium bromide (KBr) of 6 g to 50 g is used as a raw material. The raw material is heated to a temperature of 750°C to 850°C by an external heating source to generate raw material vapor. The glass pipe is heated by an oxyhydrogen burner from the outside so that a temperature of an outer surface of the glass pipe is 1400°C to 2000°C while introducing the raw material vapor into the glass pipe together with a carrier gas consisting of oxygen at a flow rate of 1 SLM (1 liter/min in terms of standard state). At this time, the burner is traversed at a speed of 30 mm/min to 60 mm/min, heating is performed for a total of 5 turns to 20 turns, and the potassium element is diffused and added to the inner surface of the glass pipe.

In the diameter-reducing process (step S3), the glass pipe doped with potassium is reduced in diameter. At this time, the glass pipe is heated by the external heating source so that an outer surface of the glass pipe is at 2000°C to 2300°C while oxygen flows inside the glass pipe at a rate of 0.5 SLM to 1.0 SLM. The glass pipe is heated by traversing the external heating source for a total of 5 turns to 15 turns, and the inner radius of the glass pipe is reduced to 3 mm to 8 mm.

In the etching process (step S4), the inner surface of the glass pipe is etched. At this time, the vapor phase etching is performed by heating the glass pipe with the external heating source while introducing a mixture gas of $SF_6$ (0.2 SLM to 1.0 SLM) and chlorine (0.5 SLM to 1.0 SLM) into the glass pipe. In this way, the inner surface of the glass pipe containing a high concentration of impurities added together with the target dopant can be shaved, and the impurities can be removed.

In the collapsing process (step S5), the glass pipe is collapsed. In the collapsing process, a single gas or a mixture gas of oxygen (0.1 SLM to 0.5 SLM) and He (0.5 SLM to 1.0 SLM) is introduced into the glass pipe, and the glass pipe is collapsed at a surface temperature of 2000°C to 2300°C while reducing the absolute pressure in the glass pipe to 97 kPa or less. By this collapse, a core region (outer diameter of 20 mm to 30 mm) made of a glass rod is obtained. A core layer not containing the alkali metal element group may be provided on an outside of the glass rod by a known method such as an outside vapor deposition (OVD) method or a collapse method.

In the stretching and grinding step (step S6), the core region is stretched to have a radius of 15 mm to 25 mm, and an outer peripheral portion of the core region is ground to have a radius of 15 mm to 25 mm. This portion is core 10 of optical fiber 1. However, the diameter immediately after the stretching is larger than the diameter after the grinding.

In the rod-in-collapse process (step S7), the core region is used as a rod, and a silica-based glass pipe doped with fluorine is used as a pipe, thereby performing rod-in-collapse. According to the rod-in-collapse method, the core region and the silica-based glass pipe doped with fluorine are heated by the external heating source and integrated. Thus, a first cladding region is added around the core region. A relative refractive index difference between the core region and the first cladding region is about 0.34% at the maximum. As a result of the addition of the first cladding region by the rod-in-collapse method, the water content of the core region and the first cladding region in the vicinity thereof can be reduced to a sufficiently low level.

In the OVD process (step S8), a rod formed by integrating the core region and the first cladding region is stretched to have a predetermined diameter, and then a second cladding region containing fluorine is synthesized on an outside of the rod by the OVD method. Thus, an optical fiber preform is manufactured.

In the drawing step (step S9), optical fiber 1 is manufactured by drawing an optical fiber preform. A drawing speed is 600 m/min to 2300 m/min. The drawing tension is, for example, 0.5 N.

Table 1 is a table in which the specifications of the manufactured and evaluated optical fibers are summarized. Table 1 shows, for each of the optical fibers, the transmission loss ($\alpha$1.55) at a wavelength of 1550 nm, the core diameters, the cutoff wavelengths ($\lambda$cc), the effective areas (Aeff) at a wavelength of 1550 nm, the average concentration of potassium in the entire core (core average K concentration CA), the average concentration of chlorine in the entire core (core average Cl concentration CC), the average concentration of fluorine in the entire core (core average F concentration CF), the core average Cl concentration/the core average K concentration (CC/CA), and the core average F concentration/the core average K concentration (CF/CA). All concentrations are "mass fraction".

[Table 1]

| | $\alpha$ 1.55 [dB/km] | CORE DIAMETER [$\mu$m] | $\lambda$ cc [nm] | Aeff [$\mu$m$^2$] | CA [ppm] | CC [ppm] | CF [ppm] | CC/CA | CF/CA |
|---|---|---|---|---|---|---|---|---|---|
| FIBER 1 | 0.148 | 11.3 | 1485 | 113 | 43 | 20 | 2026 | 0.5 | 46.6 |
| FIBER 2 | 0.145 | 11.3 | 1479 | 115 | 43 | 50 | 2018 | 1.2 | 47.1 |
| FIBER 3 | 0.144 | 11.0 | 1498 | 111 | 42 | 150 | 2046 | 3.6 | 49.2 |
| FIBER 4 | 0.144 | 11.0 | 1471 | 113 | 40 | 300 | 2049 | 7.5 | 51.0 |
| FIBER 5 | 0.144 | 11.2 | 1483 | 113 | 41 | 480 | 2000 | 11.8 | 49.0 |
| FIBER 6 | 0.143 | 11.4 | 1478 | 113 | 42 | 730 | 1951 | 17.5 | 46.7 |
| FIBER 7 | 0.143 | 11.1 | 1485 | 113 | 44 | 1400 | 1996 | 32.1 | 45.7 |
| FIBER 8 | 0.143 | 11.4 | 1496 | 112 | 43 | 3200 | 2015 | 74. 3 | 46.8 |
| FIBER 9 | 0.144 | 11.3 | 1494 | 111 | 42 | 5600 | 1967 | 134.1 | 47.1 |
| FIBER 10 | 0.144 | 11.1 | 1513 | 110 | 43 | 8900 | 1980 | 205.8 | 45.8 |
| FIBER 11 | 0.144 | 11.1 | 1513 | 110 | 41 | 13000 | 1959 | 314.7 | 47.4 |
| FIBER 12 | 0.145 | 11.2 | 1518 | 112 | 42 | 21000 | 2012 | 497. 2 | 47.6 |
| FIBER 13 | 0.148 | 11.1 | 1505 | 111 | 40 | 40000 | 2003 | 997.0 | 49.9 |
| FIBER 14 | 0.149 | 11.1 | 1477 | 112 | 1 | 1986 | 2042 | 1985.7 | 2042.0 |

(continued)

| | $\alpha$ 1.55 [dB/km] | CORE DIAMETER [$\mu$m] | $\lambda$ cc [nm] | Aeff [$\mu$m$^2$] | CA [ppm] | CC [ppm] | CF [ppm] | CC/CA | CF/CA |
|---|---|---|---|---|---|---|---|---|---|
| FIBER 15 | 0.148 | 11.3 | 1505 | 115 | 2 | 2001 | 2030 | 1000.5 | 1015.2 |
| FIBER 16 | 0.144 | 11.1 | 1493 | 114 | 10 | 2025 | 2018 | 202.5 | 201.8 |
| FIBER 17 | 0.144 | 11.1 | 1499 | 111 | 23 | 1976 | 2028 | 85.9 | 88.2 |
| FIBER 18 | 0.143 | 11.1 | 1498 | 112 | 45 | 1970 | 1958 | 43.8 | 43.5 |
| FIBER 19 | 0.143 | 11.3 | 1498 | 110 | 90 | 1991 | 2029 | 22.1 | 22.5 |
| FIBER 20 | 0.144 | 11.5 | 1511 | 110 | 210 | 2035 | 1985 | 9.7 | 9.5 |
| FIBER 21 | 0.144 | 11.5 | 1508 | 114 | 310 | 2027 | 2004 | 6.5 | 6.5 |
| FIBER 22 | 0.144 | 11.0 | 1487 | 113 | 1000 | 1997 | 1953 | 2.0 | 2.0 |
| FIBER 23 | 0.145 | 11.2 | 1516 | 110 | 1800 | 2001 | 2013 | 1.1 | 1.1 |
| FIBER 24 | 0.148 | 11.3 | 1502 | 110 | 2500 | 1988 | 1997 | 0.8 | 0.8 |
| FIBER 25 | 0.144 | 11.6 | 1510 | 114 | 43 | 1962 | 30 | 45.9 | 0.7 |
| FIBER 26 | 0.144 | 11.4 | 1511 | 111 | 41 | 1969 | 300 | 47.6 | 7.2 |
| FIBER 27 | 0.143 | 11.6 | 1512 | 110 | 43 | 2042 | 700 | 47.1 | 16.1 |
| FIBER 28 | 0.143 | 11.4 | 1485 | 114 | 43 | 2000 | 1010 | 46.3 | 23.4 |
| FIBER 29 | 0.144 | 11.4 | 1506 | 111 | 41 | 2023 | 1570 | 49.7 | 38.6 |
| FIBER 30 | 0.144 | 11.1 | 1501 | 114 | 42 | 1969 | 2010 | 47.2 | 48.2 |
| FIBER 31 | 0.144 | 11.6 | 1482 | 111 | 43 | 1965 | 3200 | 45.6 | 74.2 |
| FIBER 32 | 0.144 | 11.1 | 1474 | 114 | 43 | 2009 | 4300 | 46.7 | 100.0 |
| FIBER 33 | 0.148 | 11.4 | 1486 | 114 | 43 | 1976 | 5100 | 46.4 | 119.7 |

Fibers 1 to 13 are a group of optical fibers manufactured by varying the core average Cl concentration from 20 ppm to 40000 ppm on a mass fraction basis. The core average Cl concentration was varied by the chlorine concentration of the silica-based glass cylindrical body which is the base of the glass pipe prepared in the preparing process. In the fibers 1 to 13, the core average K concentration is maintained between 40 ppm and 43 ppm on a mass fraction basis. The core average F concentration is maintained at approximately 2000 ppm on a mass fraction basis.

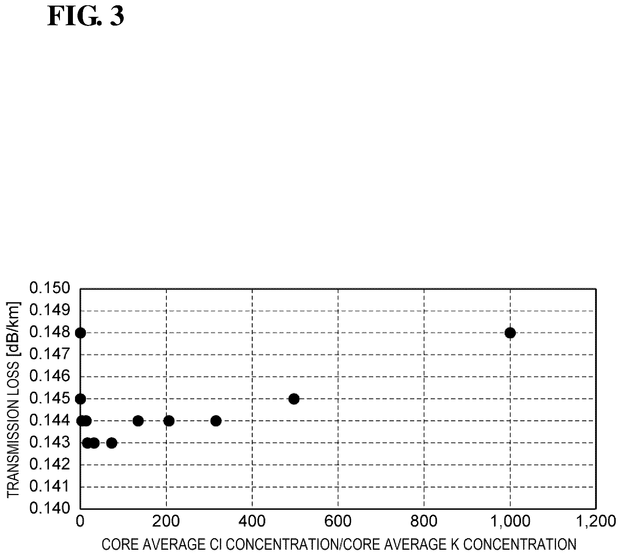

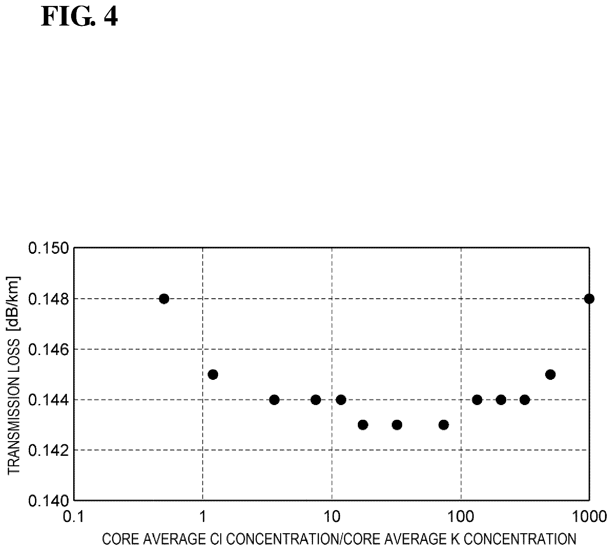

In FIG. 3, the core average Cl concentration/the core average K concentration and the transmission loss at a wavelength of 1550 nm are plotted for each of the fibers 1 to 13. FIG. 4 is a graph in which the horizontal axis of FIG. 3 is represented by a Log scale. As shown in FIGS. 3 and 4, when the core average Cl concentration/the core average K concentration is less than 1.0, the transmission loss becomes large. This is considered to be because the concentration of potassium added is relatively higher than the concentration of chlorine added, and the amount of chlorine bonded to the glass defects generated during drawing is insufficient. On the other hand, when the core average Cl concentration/the core average K concentration is larger than 500, the transmission loss is also increased. In this case, it is considered that chlorine is sufficiently bonded to the glass defects, but the concentration of chlorine added is high, and the increase in transmission loss due to concentration fluctuation occurs.

Fibers 14 to 24 are a group of optical fibers manufactured by changing the core average K concentration from 1 ppm to 2500 ppm on a mass fraction basis. The core average K concentration was varied by the amount of potassium added in the doping process. In the fibers 14 to 24, the core average Cl concentration is maintained at approximately 2000 ppm on a mass fraction basis. The core average F concentration is maintained at approximately 2000 ppm on a mass fraction basis.

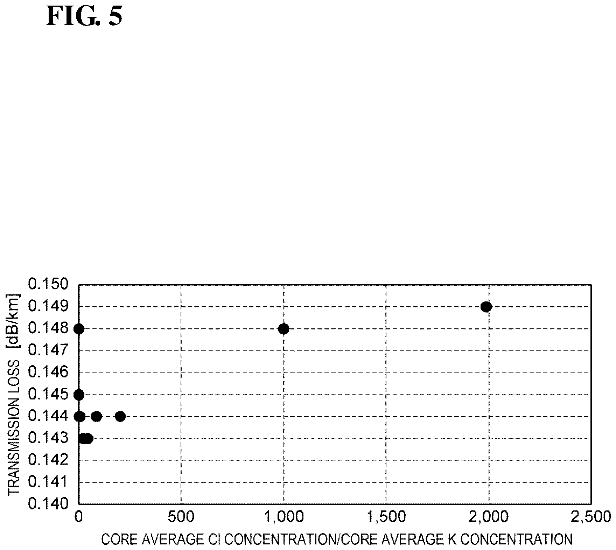

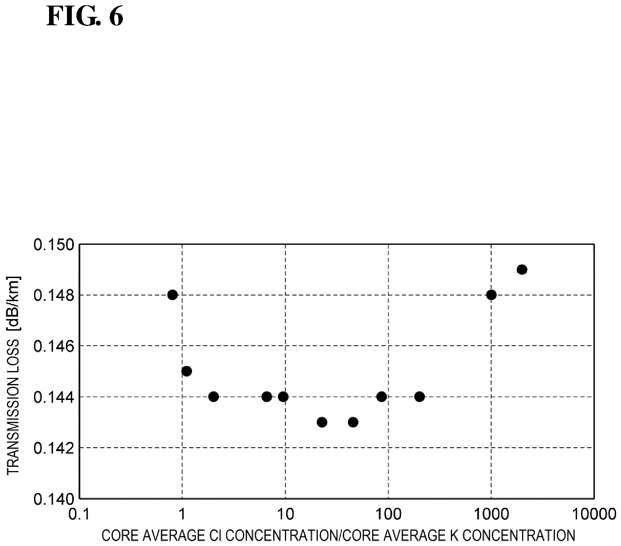

In FIG. 5, the core average Cl concentration/the core average K concentration and the transmission loss at a wavelength of 1550 nm are plotted for each of the fibers 14 to 24. FIG. 6 is a graph in which the horizontal axis of FIG. 5 is represented by a Log scale. As in FIGs. 3 and 4, in FIGs. 5 and 6, the transmission loss is large when the core average Cl concentration/the core average K concentration is less than 1.0. This is considered to be because the concentration of potassium added is relatively higher than the concentration of chlorine added, and the amount of chlorine bonded to the glass defects generated during drawing is insufficient. On the other hand, when the core average Cl concentration/the core average K concentration is larger than 500, the transmission loss is also increased. In this case, it is considered that chlorine is sufficiently bonded to the glass defects, but the concentration of chlorine added is high, and the increase in transmission loss due to concentration fluctuation occurs.

Fibers 25 to 33 are a group of optical fibers manufactured by changing the core average F concentration from 30 ppm to 5100 ppm on a mass fraction basis. The core average F concentration was varied by the fluorine concentration of the silica-based glass cylindrical body which is the base of the glass pipe prepared in the preparing process. In the fibers 25 to 33, the core average K concentration is maintained between 41 ppm and the 43 ppm on a mass fraction basis. The core average Cl concentration is maintained at approximately 2000 ppm on a mass fraction basis.

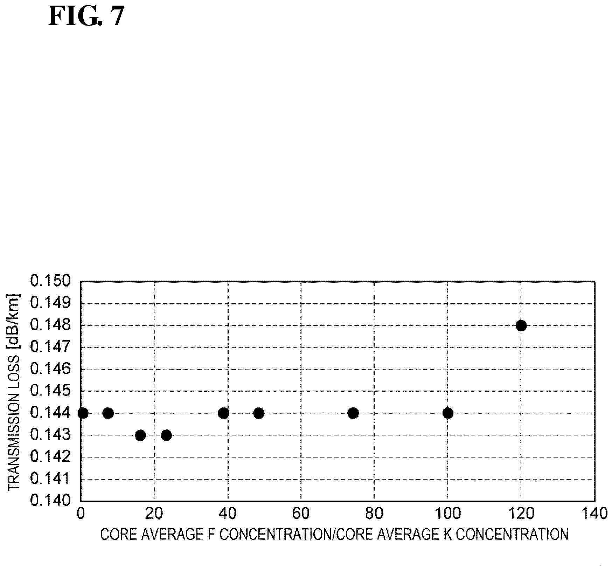

In FIG. 7, the core average F concentration/the core average K concentration and the transmission loss at a wavelength of 1550 nm are plotted for each of the fibers 25 to 33. As shown in FIG. 7, when the core average F concentration/the core average K concentration is 100 or less, the transmission loss is stably low. This is considered to be because the effect of reducing the transmission loss and the effect of increasing the transmission loss, which are caused by the addition of fluorine, are substantially the same. The effect of reducing the transmission loss occurs because the addition of fluorine lowers the viscosity and thereby lowers the Rayleigh scattering. The effect of increasing the transmission loss occurs because the addition of fluorine increases in the concentration fluctuation. On the other hand, when the core average F concentration/the core average K concentration is larger than 100, the transmission loss increases. This is considered to be because the effect of increasing the transmission loss is larger than the effect of reducing the transmission loss caused by the addition of fluorine.

Table 2 shows the results of investigation of the relationship between the transmission loss and the profile in the radius direction of the Cl concentration/the K concentration, which is the ratio of the chlorine concentration to the potassium concentration in the core. Table 2 shows whether the Cl concentration/the K concentration profile has an increasing tendency in each of an area smaller than 1/2 of the core radius from the central axis of the optical fiber and an area larger than 1/2 of the core radius. Here, a slope is obtained by least squares with the radius and the Cl concentration/the K concentration, and when the slope is positive, the profile has an increasing tendency. When the slope is zero or negative, the profile has a non-increasing tendency.

[Table 2]

| | $\alpha$ 1.55 [dB/km] | Cl CONCENTRATION/K CONCENTRATION PROFILE | |
| --- | --- | --- | --- |
| | | RANGE SMALLER THAN 1/2 OF CORE RADIUS | RANGE LARGER THAN 1/2 OF CORE RADIUS |
| FIBER A1 | 0.143 | INCREASING TENDENCY | INCREASING TENDENCY |
| FIBER A2 | 0.144 | INCREASING TENDENCY | NON-INCREASING TENDENCY |
| FIBER A3 | 0.145 | NON-INCREASING TENDENCY | INCREASING TENDENCY |
| FIBER A4 | 0.145 | NON-INCREASING TENDENCY | NON-INCREASING TENDENCY |

Fibers A1 to A4 are a group of optical fibers manufactured by changing the Cl concentration/the K concentration profile in the core. Since the chlorine concentration is substantially constant in the entire core, the Cl concentration/the K concentration profile in the core can be varied by the concentration profile of potassium. The fibers A1 to A4 were manufactured with the effective area in a range of 110 $\mu$m$^2$ to 115 $\mu$m$^2$, the cutoff wavelengths in a range of 1500 nm to 1525 nm, the core average K concentration in a range of 38 ppm to 43 ppm, the average Cl concentration of the core region in a range of 1000 ppm to 1500 ppm, and the core average F concentration in a range of 1800 ppm to 2200 ppm.

When the Cl concentration/the K concentration profile in an area smaller than 1/2 of the core radius had an increasing tendency, the transmission loss was good regardless of the tendency of the Cl concentration/the K concentration profile in an area larger than 1/2 of the core radius. This is considered to be because the scattering loss due to the mismatch of the refractive index or the like in the core is reduced by monotonically increasing the Cl concentration/the K concentration in the core central portion where the power of the transmitted light is high.

Table 3 shows the results of an investigation focusing on a maximum value of the Cl concentration/the K concentration in an area within 1 $\mu$m from the central axis of the optical fiber.

[Table 3]

| | $\alpha$ 1.55 [dB/km] | MAXIMUM VALUE OF CI CONCENTRATION/ K CONCENTRATION WITHIN RANGE OF 1 $\mu$m FROM CENTRAL AXIS | CI CONCENTRATION/K CONCENTRATION PROFILE | |
| --- | --- | --- | --- | --- |
| | | | RANGE SMALLER THAN 1/2 OF CORE RADIUS | RANGE LARGER THAN 1/2 OF CORE RADIUS |
| FIBER B1 | 0.142 | 0.2 | INCREASING TENDENCY | INCREASING TENDENCY |
| FIBER B2 | 0.143 | 0.3 | INCREASING TENDENCY | INCREASING TENDENCY |
| FIBER B3 | 0.146 | 1.1 | INCREASING TENDENCY | INCREASING TENDENCY |
| FIBER B4 | 0.146 | 1.2 | INCREASING TENDENCY | INCREASING TENDENCY |

Fibers B1 to B4 are a group of optical fibers manufactured such that the Cl concentration/the K concentration profile in the core has an increasing tendency in each of an area smaller than 1/2 of the core radius from the central axis of the optical fiber and an area larger than 1/2 of the core radius. The fibers B1 to B4 were manufactured with the effective area in a range of 110 $\mu$m$^2$ to 115 $\mu$m$^2$, the cutoff wavelengths in a range of 1500 nm to 1525 nm, and the core average K concentration in a range of 38 ppm to 43 ppm.

When the maximum value of the Cl concentration/the K concentration in an area within 1 $\mu$m from the central axis of the optical fiber is 1.0 or more, the transmission loss increases. The reason for this is presumed to be that, when the chlorine concentration is increased with respect to the same K concentration, fine crystals are generated in the optical fiber preform, and this leads to an increase in scattering loss when the optical fiber is formed from the optical fiber preform.

While the embodiments have been described, the present disclosure is not necessarily limited to the above-described embodiments and modifications, and various changes can be made without departing from the spirit and scope of the present disclosure.

REFERENCE SIGNS LIST

1 optical fiber

1a central axis

10 core

20 cladding

**Claims**

1.    An optical fiber made of silica-based glass, the optical fiber comprising:

a core containing chlorine and one or more elements among an alkali metal element group consisting of alkali metal elements and alkaline-earth metal elements; and
a cladding surrounding the core and having a refractive index lower than a refractive index of the core,
wherein an average concentration CA of the alkali metal element group in the entire core and an average concentration CC of chlorine in the entire core satisfy CC/CA > 1.0.

2.    The optical fiber according to claim 1,
wherein CC/CA is smaller than 500.

3.    The optical fiber according to claim 1 or 2,
wherein in an area ranging from a central axis of the optical fiber to a position at 1/2 of a radius of the core, a straight line obtained by fitting, by least squares, values of a ratio CC (r)/CA (r) of a concentration CA (r) of the alkali metal element group to a concentration CC (r) of chlorine at a position of a radius r away from the central axis of the optical fiber has a positive slope.

4. The optical fiber according to claim 3,
   wherein CC (r)/CA (r) is less than 1 in an area within 1 $\mu$m from the central axis of the optical fiber.

5. The optical fiber according to any one of claims 1 to 4,

   wherein the core further contains fluorine, and
   an average concentration CF of fluorine in the entire core satisfies CF/CA $\leq$ 100.

6. The optical fiber according to any one of claims 1 to 5,
   wherein the average concentration CA of the alkali metal element group in the entire core is 0.2 ppm to 2000 ppm on a mass fraction basis.

7. The optical fiber according to any one of claims 1 to 6,
   wherein the core contains, as the alkali metal element group, one or more elements among sodium, potassium, rubidium, cesium, and calcium.

# FIG. 1

# FIG. 2

```
        ┌─────────────┐
        │   START     │
        └──────┬──────┘
               │
    ┌──────────────────────────┐
    │    PREPARING PROCESS      │──── S1
    └──────────┬───────────────┘
               │
    ┌──────────────────────────┐
    │     DOPING PROCESS        │──── S2
    └──────────┬───────────────┘
               │
    ┌──────────────────────────┐
    │ DIAMETER-REDUCING PROCESS │──── S3
    └──────────┬───────────────┘
               │
    ┌──────────────────────────┐
    │     ETCHING PROCESS       │──── S4
    └──────────┬───────────────┘
               │
    ┌──────────────────────────┐
    │   COLLAPSING PROCESS      │──── S5
    └──────────┬───────────────┘
               │
    ┌──────────────────────────┐
    │ STRETCHING AND GRINDING PROCESS │──── S6
    └──────────┬───────────────┘
               │
    ┌──────────────────────────┐
    │  ROD-IN-COLLAPSE PROCESS  │──── S7
    └──────────┬───────────────┘
               │
    ┌──────────────────────────┐
    │      OVD PROCESS          │──── S8
    └──────────┬───────────────┘
               │
    ┌──────────────────────────┐
    │    DRAWING PROCESS        │──── S9
    └──────────┬───────────────┘
               │
        ┌─────────────┐
        │    END      │
        └─────────────┘
```

# FIG. 3

# FIG. 4

# FIG. 5

# FIG. 6

# FIG. 7

## INTERNATIONAL SEARCH REPORT

| International application No. |
| --- |
| **PCT/JP2023/000220** |

**A.  CLASSIFICATION OF SUBJECT MATTER**

*G02B 6/02*(2006.01)i; *C03C 13/04*(2006.01)i
FI:  G02B6/02 376A; C03C13/04

According to International Patent Classification (IPC) or to both national classification and IPC

**B.  FIELDS SEARCHED**

Minimum documentation searched (classification system followed by classification symbols)

G02B6/02-6/036; C03C13/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2020-12933 A (SUMITOMO ELECTRIC INDUSTRIES, LTD.) 23 January 2020 (2020-01-23)<br>paragraphs [0015]-[0036], fig. 3-6 | 1-3, 5-7 |
| X | JP 2019-191297 A (SUMITOMO ELECTRIC INDUSTRIES, LTD.) 31 October 2019 (2019-10-31)<br>paragraphs [0013]-[0038], fig. 1-5 | 1-3, 5-7 |
| X | JP 2015-105199 A (SUMITOMO ELECTRIC INDUSTRIES, LTD.) 08 June 2015 (2015-06-08)<br>paragraphs [0016]-[0053], fig. 1-7 | 1-4, 6-7 |
| X | JP 2012-229150 A (SUMITOMO ELECTRIC INDUSTRIES, LTD.) 22 November 2012 (2012-11-22)<br>paragraphs [0027]-[0042], [0065], [0076], fig. 3, 4 | 1, 6-7 |
| X | JP 2009-541796 A (CORNING INC.) 26 November 2009 (2009-11-26)<br>paragraphs [0028]-[0033] | 1, 6-7 |

☑ Further documents are listed in the continuation of Box C.          ☑ See patent family annex.

| | |
| --- | --- |
| *      Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **24 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/000220**

| C. | DOCUMENTS CONSIDERED TO BE RELEVANT | | |
|---|---|---|---|
| Category* | Citation of document, with indication, where appropriate, of the relevant passages | | Relevant to claim No. |
| A | JP 2017-76053 A (SUMITOMO ELECTRIC INDUSTRIES, LTD.) 20 April 2017 (2017-04-20)<br>entire text, all drawings | | 1-7 |
| A | JP 2007-504080 A (CORNING INC.) 01 March 2007 (2007-03-01)<br>entire text, all drawings | | 1-7 |
| A | US 2021/0294029 A1 (CORNING INC.) 23 September 2021 (2021-09-23)<br>entire text, all drawings | | 1-7 |

Form PCT/ISA/210 (second sheet) (January 2015)

INTERNATIONAL SEARCH REPORT
Information on patent family members

International application No.

PCT/JP2023/000220

| Patent document cited in search report | | | Publication date (day/month/year) | Patent family member(s) | | | Publication date (day/month/year) |
|---|---|---|---|---|---|---|---|
| JP | 2020-12933 | A | 23 January 2020 | US | 2020/0024182 | A1 | |
| | | | | paragraphs [0018]-[0037], fig. 3-6 | | | |
| | | | | GB | 2576819 | A | |
| | | | | FR | 3084073 | A1 | |
| | | | | CN | 110727044 | A | |
| JP | 2019-191297 | A | 31 October 2019 | US | 2019/0324195 | A1 | |
| | | | | paragraphs [0014]-[0036], fig. 1-5 | | | |
| | | | | GB | 2574317 | A | |
| | | | | FR | 3080463 | A1 | |
| | | | | CN | 110389405 | A | |
| JP | 2015-105199 | A | 08 June 2015 | WO | 2015/079987 | A1 | |
| JP | 2012-229150 | A | 22 November 2012 | US | 2012/0263427 | A1 | |
| | | | | paragraphs [0036]-[0050], [0072], tables, fig. 4, 5 | | | |
| | | | | EP | 2511741 | A2 | |
| | | | | CN | 102730977 | A | |
| JP | 2009-541796 | A | 26 November 2009 | US | 2007/0297735 | A1 | |
| | | | | paragraphs [0031]-[0036] | | | |
| | | | | WO | 2007/149344 | A1 | |
| | | | | EP | 2035869 | A1 | |
| | | | | KR | 10-2009-0024271 | A | |
| | | | | CN | 101495893 | A | |
| JP | 2017-76053 | A | 20 April 2017 | US | 2017/0108642 | A1 | |
| | | | | GB | 2543956 | A | |
| | | | | FR | 3042606 | A1 | |
| | | | | CN | 106908897 | A | |
| JP | 2007-504080 | A | 01 March 2007 | US | 2005/0063663 | A1 | |
| | | | | WO | 2005/021455 | A2 | |
| | | | | EP | 1663890 | A2 | |
| | | | | CN | 1842499 | A | |
| | | | | KR | 10-2006-0123712 | A | |
| US | 2021/0294029 | A1 | 23 September 2021 | WO | 2021/188289 | A1 | |
| | | | | EP | 3882676 | A1 | |
| | | | | NL | 2025269 | B | |

Form PCT/ISA/210 (patent family annex) (January 2015)

**EP 4 481 450 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022021856 A
- JP 2009541796 W
- JP 2017076053 A